# EUROPEAN PATENT APPLICATION

(11) **EP 4 056 629 A1**
(43) Date of publication of application: **14.09.2022**
(21) Application number: 20901544.5
(22) Date of filing: 09.12.2020
(51) Int. Cl.: C08J 5/00, B29B 17/04, C08J 11/00

(54) **SYNTHETIC RESIN MOLDED ARTICLE USING PLASTIC WASTE**

(30) Priority: 16.12.2019 JP 2019226084
(71) Applicant: Technique Co., Ltd., Tokyo, 157-0061 (JP)
(72) Inventor: KAMITE Masayuki, Tokyo 157-0061 (JP)
(74) Representative: Prüfer & Partner mbB Patentanwälte · Rechtsanwälte
(86) International application number: PCT/JP2020/045858
(87) International publication number: WO 2021/125016

(57) **Abstract**

The present invention provides a synthetic resin molded product reusing plastic waste including a plurality of kinds of plastics mixed therein (such as ocean plastic trash, and hardly classifiable plastic trash in industrial waste or general waste) as raw materials, and having a high sense of design, and provides a manufacturing method thereof. The molded product is characterized by being molded with a powder of plastic waste including a plurality of kinds of plastics mixed therein, and a powder of a second material (such as a woodchip) not molten under a temperature condition of 200°C as raw materials, and is characterized in that a large number of spots 33 different in color and/or glossiness from a base color of the molded product (deck material 31) are scattered at random on a surface of the molded product, and in that a stipple pattern is formed on the surface of the molded product.

## Description

### TECHNICAL FIELD

The present invention relates to a synthetic resin molded product reusing plastic waste, that is derived from ocean plastic trash, industrial waste discharged from factories of companies or the like, general waste discharged by consumers and the like, and that is including a plurality of kinds of plastics mixed therein, as raw materials, and relates to a manufacturing method thereof.

### BACKGROUND ART

Currently, there is a concern that marine pollution due to a large amount of drifting plastic trash is becoming more serious. Thus, it is a pressing issue worldwide to establish a method of effective disposal of ocean plastic trash. For example, when the recovered ocean plastic trash can be reused as the raw material for a new synthetic resin molded product (material recycled, remade into new products), the cause of marine pollution can be removed, and the adverse effects on the natural environment can be reduced.

However, ocean plastic trash is recovered with a large number of kinds of plastics mixed therein (in a miscellaneous state). Whereas, plastics vary in physical properties (such as softening melting temperature and hardness) according to the kind, and hence are very difficult to use for material recycling while being in a miscellaneous state.
Patent Document 1: JP 6408896 B
Patent Document 2: JP 2005-66515 A
Patent Document 3: JP S62-297112 A

### SUMMARY OF INVENTION

### Technical Problem

When the recovered ocean plastic trash can be classified according to the kind, the possibility of being able to use these for material recycling increases. However, with the current technology, it is very difficult to classify all the recovered ocean plastic trash according to the kind. Accordingly, most plastics except for some kinds of plastics undesirably cannot be used for material recycling.

Specifically, for example, a PET resin of the plastics included in the recovered ocean plastic trash is relatively easy to sort from the state in which a large number of kinds of plastics are mixed. Actually, an attempt has been made to reuse the PET bottles sorted from among ocean plastic trash as the raw materials for a new molded product made of a PET resin. However, the number of kinds of plastics which can be easily sorted from the state in which a large number of kinds of plastics are mixed is very small. Most plastics cannot be used for material recycling with the current technology.

Incidentally, the recovered ocean plastic trash may be used as a part of the product raw material with a large number of kinds of plastics mixed therein without classification according to the kind. This is, however, used just by being mixed with concrete for manufacturing a block, or by being mixed with asphalt or stone for use as a road material. This is only confining of the ocean plastic trash in another product, which is actually far from material recycling.

Further, also in the industrial waste discharged from factories of companies or general waste discharged by consumers, there is plastic trash including a large number of kinds of plastics mixed therein, and difficult to additionally classify. Such hardly classifiable plastic trash cannot be used for material recycling, and is currently mainly used for thermal recycle (such as heat energy recovery by burning or conversion to RPF).

Further, a conventional synthetic resin molded product reusing plastic waste as a raw material undesirably often has a coarse surface texture, and has poor-looking external shape. More specifically, when a synthetic resin molded product is tried to be substituted for such a product as the one originally using a natural wood (e.g., various construction materials), it is demanded to have feel or surface texture analogous to that of a natural wood while being a synthetic resin molded product. However, when a synthetic resin molded product is manufactured reusing plastic waste as the raw material, the external appearance thereof often gives absolutely cheap synthetic product-like impression far from the natural wood-like feel.

The present invention is for solving such problems of the prior art. It is an object of the present invention to provide a synthetic resin molded product reusing plastic waste including a plurality of kinds of plastics mixed therein (including ocean plastic trash, hardly classifiable plastic trash in industrial waste or general waste, and the like) as raw materials, and having an external appearance that does not look like a synthetic product, and a manufacturing method thereof.

### Solution to Problem

A synthetic resin molded product using plastic waste in accordance with the present invention is characterized by being molded using a powder of plastic waste including plurality of kinds of plastics mixed therein, and a powder of a second material not molten under a temperature condition of 200°C as raw materials, and is characterized in that a large number of spots different in color and/or glossiness from a base color colored in plastic of the molded product are scattered at random on a surface of the molded product, and a stipple pattern is formed on the surface of the molded product.

Incidentally, ocean plastic trash, or hardly classifiable plastic trash in industrial waste or general waste is used as the plastic waste serving as the raw material. Further, preferably, a powder of plastic having a higher melting point than a molding temperature of plastics included in the plastic waste serving as the raw material, and a powder of a second material are dispersed still in an original color in an inside and on a surface of the molded product, and out of these, those different in color and/or glossiness from the base color, and exposed at the surface of the molded product constitute the spots.

Still further, a method for manufacturing a synthetic resin molded product using plastic waste in accordance with the present invention is characterized by including, mixing 30 to 80 wt% of plastic waste including a plurality of kinds of plastics each having a diameter or a side of 5 mm or less or a weight of 0.1 g or less and having different colors and melting points mixed therein, and 20 to 70 wt% of a second material having a diameter or a side of 5 mm or less, and not molten under a temperature condition of 200°C, grinding a mixture thereof into a powder with a diameter or a side of 1 mm or less by a grinding device, and supplying the resulting powder to a molding machine, and carrying out a molding step, and is characterized in that a powder of plastic having a higher melting point than a molding temperature of plastics included in the plastic waste and a powder of a second material, that are different in color and/or glossiness from a base color of the molded product, form spots constituting a stipple pattern on a surface of the molded product.

### Advantageous Effects of Invention

For the synthetic resin molded product using plastic waste in accordance with the present invention, a large number of small spots different in color and/or glossiness from the base color of the molded product are scattered at random on the surface of the molded product. The spots form a stipple pattern on the surface of the molded product. Thus, the molded product has a surface layer design which cannot be expressed by plastic singly, and does not look like a synthetic product.

Further, plastic waste (such as ocean plastic trash, and hardly classifiable plastic trash in industrial waste or general waste) including a plurality of kinds of plastics mixed therein (in a miscellaneous state) could not be used for material recycling (i.e., reused as raw materials for a new synthetic resin molded product) by the prior art. However, in accordance with the present invention, plastic waste in a miscellaneous state can be mostly reused as raw materials for a synthetic resin molded product still in a miscellaneous state without classification according to the kind. As a result, it is possible to effectively use exhaustible resources, and additionally, it is possible to establish a method of effective disposal of ocean plastic trash, which can largely contribute to the reduction of adverse effects on natural environment.

### BRIEF DESCRIPTION OF DRAWINGS

Fig. 1 is a plan view of a synthetic resin molded product (deck material 31) in accordance with First Embodiment of the present invention.
Fig. 2 is an explanatory view of a method for manufacturing a synthetic resin molded product in accordance with Second Embodiment of the present invention.
Fig. 3 is a view showing a configuration example of a grinding device 4 usable in the method for manufacturing a synthetic resin molded product in accordance with Second Embodiment of the present invention.
Fig. 4 is a view showing another configuration example of the grinding device 4 usable in the method for manufacturing a synthetic resin molded product in accordance with Second Embodiment of the present invention.
Fig. 5 is an enlarged cross sectional view of the surface layer part of a deck material 31 manufactured by the method for manufacturing a synthetic resin molded product in accordance with Second Embodiment of the present invention.

### DESCRIPTION OF EMBODIMENTS

A synthetic resin molded product using plastic waste in accordance with the present invention is a synthetic resin molded product obtained by molding plastic waste including a plurality of kinds of plastics mixed therein (including ocean plastic trash, hardly classifiable plastic trash included in industrial waste or general waste, and the like) as a first raw material, and can be configured as, for example, various building materials (such as a deck material, a pillar material, a strut material, a wall panel material, a handrail material, and a window frame material), materials for civil engineering and construction (such as a pile, an earth-retaining fence, and a roadbed material (interlocking block)), miscellaneous goods (such as a flowerpot, a planter, and a box), furniture, or other products (including semimanufactured goods and components). Below, the example configured with the synthetic resin molded product in accordance with the present invention as a "deck material" will be referred to as First Embodiment. Further, a manufacturing method thereof will be referred to as Second Embodiment of the present invention. Thus, a description will be given.

### - First Embodiment (deck material)

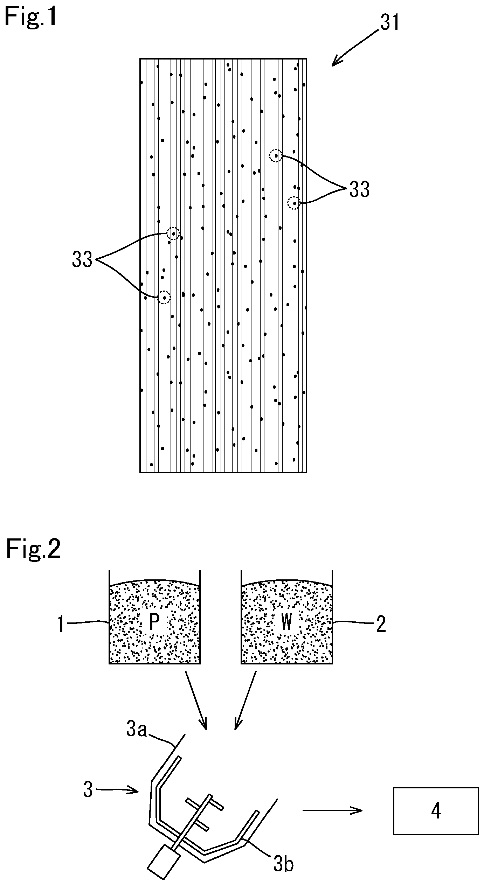

Fig. 1 is a plan view of a synthetic resin molded product (deck material 31) in accordance with First Embodiment of the present invention. As shown, a large number of concaves and convexes extending in the longitudinal direction are formed on the surface of the deck material 31.

The deck material 31 has the following feature: a large number of small spots 33 different in color and/or glossiness from the base color thereof are scattered at random on the surface; and the spots 33 form a stipple pattern on the deck material surface. For this reason, the deck material 31 has a high sense of design not observable in a conventional deck material. The spots 33 are derived from the unmolten particle of plastic waste used as the first raw material, or the second raw material to be mixed with plastic waste (which will be hereinafter referred to as a "second material").

In the present embodiment, plastic waste P including a plurality of kinds of plastics mixed therein, including ocean plastic trash sorted from the recovered ocean floating trash, hardly classifiable plastic trash (plastic trash difficult to additionally classify) in industrial waste or general waste, and the like is used as the first raw material. In the ocean plastic trash, and the hardly classifiable plastic trash in industrial waste or general waste, plastics in various colors are mixed, and those having different melting points (e.g., those having a melting point of 200°C or more, and those of 200°C or less) are mixed. Further, a plastic film with foreign matters such as aluminum or paper deposited thereon, or the like may be mixed therein.

On the other hand, as the second material to be mixed with the plastic waste P, a material not molten under a temperature condition of 200°C is used. In the present embodiment, a woodchip W is used as the second material. The term "woodchip" herein referred to means a fragment of wood such as a natural wood, a laminated wood, a MDF, or a plywood or a wood flour thereof, and includes sawdust and shavings generated in association with working of wood at a lumber mill, a manufacturing plant of a woodwork product, or the like, and the discarded wood, lumber remnants thereof, or those obtained by crushing wood products (such as wooden furniture and wooden construction material) or a driftwood.

The plastic waste P including a plurality of kinds of plastics mixed therein, and the powder of the woodchip W not molten under a temperature condition of 200°C (with a diameter or a side of 1 mm or less) are supplied to a molding machine (such as an extrusion molding machine, an injection molding machine, a press molding machine, or a casting molding machine), thereby to mold the deck material 31 as shown in Fig. 1. As a result, out of the plastics included in the plastic waste P, the powder of plastic having a lower melting point than the molding temperature (the heating temperature set for the molding machine, for example, 200°C) is molten, and mixed, resulting in a binder of the deck material 31 (molded product). On the other hand, plastics having a higher melting point than the molding temperature, foreign matters such as aluminum and paper, and the powder of the woodchip W are not molten, and function as a filler while being dispersed in the inside and on the surface of the binder.

At this step, the base color of the deck material 31 becomes the color synthesized by mixing various original colors of the plastics serving as a binder and having a lower melting point than the molding temperature (e.g., a color in a grey range, or a color in a brown range when a brown pigment is added as a sub raw material). In contrast, plastics having a higher melting point than the molding temperature, foreign matters such as aluminum and paper, and the powder of the woodchip W are dispersed still in their respective original colors in the inside of the deck material 31. Then, out of these, those different in color and/or glossiness from the base color, and exposed at the surface of the deck material 31 constitute the spots 33.

Incidentally, the raw materials (plastics having a higher melting point than the molding temperature, foreign matters such as aluminum and paper, and the powder of the woodchip W) serving as the source of the spots 33 are not exposed at the surface of the deck material 31 immediately after molding. However, the raw materials serving as the source of the spots 33 can be exposed at the surface of the deck material 31 by subjecting the surface to brushing processing using a rotary brush, or the like, and scraping off the surface layer (resin layer) of the deck material 31.

Then, the color of the spots 33 (the different color from the base color) and the change in reflection of a light form a natural stipple pattern with a very high sense of design on the surface. In addition, brushing processing can provide a distinctive surface with natural feel, having a proper surface roughness like the rough surface of a wooden solid natural material, and reflecting a light in a manner closely analogous to that of a natural wood.

### - Second Embodiment (method for manufacturing synthetic resin molded product)

The deck material 31 of Fig. 1 described as First Embodiment can be manufactured in the following manner. First, plastic waste P including a plurality of kinds of plastics mixed therein is prepared, and is accommodated in a first tank 1 shown in Fig. 2. Further, a second material not molten under a temperature condition of 200°C is prepared, and is accommodated in a second tank 2 shown in Fig. 2.

In the present embodiment, the ocean plastic trash sorted from the recovered ocean floating trash, hardly classifiable plastic trash in industrial waste or general waste, and the like are used as the plastic waste P. In ocean plastic trash, and hardly classifiable plastic trash in industrial waste or general waste, plastics in various colors are mixed, and those having different melting points (those having a melting point of 200°C or more, and those of 200°C or less) are mixed. Further, a plastic film with foreign matters such as aluminum and paper deposited thereon, or the like may be mixed. However, the mixing amount of other substances than plastics is preferably 10 wt% or less based on the total amount of the plastic waste P.

The plastic waste P is in a fragment-shaped form with a diameter or a side of 5 mm or less, or a weight of 0.1 g or less, and is accommodated in the first tank 1. Therefore, when the plastic waste P has a size of a diameter or a side of 5 mm or more or a weight of 0.1 g or more, before accommodation into the first tank 1, the step of crushing the plastic waste P into a fragment-shaped form with a diameter or a side of 5 mm or less or a weight of 0.1 g or less using a crusher or the like is carried out. Incidentally, those in other forms than the fragment-shaped form (e.g., those with a length of 5 mm or more got into a lint shape, and those in a fine powder form) may be included in the plastic waste P.

In the present embodiment, a woodchip W is used as the second material not molten under a temperature condition of 200°C. The woodchip W means a fragment of wood such as a natural wood, a laminated wood, a MDF, or a plywood or a wood flour thereof, and includes sawdust and shavings generated in association with working of wood at a lumber mill, a manufacturing plant of a woodwork product, or the like, and the discarded wood, lumber remnants thereof, or those obtained by crushing wood products (such as wooden furniture and wooden construction material) or a driftwood.

The woodchip W has a diameter or a side of 5 mm or less, and is accommodated in the second tank 2. Therefore, when the woodchip W has a size of a diameter or a side of 5 mm or more, the step of crushing the woodchip W so as to provide a diameter or a side of 5 mm or less is carried out using a crusher or the like before the accommodation into the second tank 2. Incidentally, the woodchip W may include foreign matters such as papers, fibers, laminate sheets, or metal powder mixed therein.

The plastic waste P accommodated in the first tank 1, and the woodchip W accommodated in the second tank 2 are respectively transported by a transport device (not shown), and are charged into the mixer 3. As the mixer 3, for example, as shown in Fig. 2, there is used the one configured such that a stirring impeller 3b rotates at a low speed (e.g., 600 rpm) in a bowl 3a, and capable of stirring and mixing the charged object to be processed in the bowl 3a.

Incidentally, although the mixing ratios of the plastic waste P and the woodchip W are preferably set as the equal amounts (50 wt% for each), the mixing ratios can be appropriately increased or decreased according to the conditions (set at 30 to 80 wt% for the plastic waste P, and at 20 to 70 wt% for the woodchip W).

Further, the plastic waste P and the woodchip W have been equalized in terms of the size (the upper limit size) at the time point when the plastic waste P and the woodchip W are accommodated in the tanks 1 and 2, respectively. However, it may be difficult to uniformly mix them entirely with short-time stirring due to the reason that the plastic waste P and the woodchip W are different from each other in specific gravity and shape, and other reasons. In such a case, stirring is preferably performed long enough. For example, when stirring is performed over 5 minutes or more, the frictional heat generated in association with stirring removes the moisture included in the whole raw materials, and slightly softens the soft plastics (particularly, film-shaped plastic) in the plastic waste P, and makes the soft plastics compatible with the woodchip W. As a result, the whole can be uniformly mixed. However, the entire mixture may be able to be uniformly mixed with short-time (e.g., 1-minute) stirring. Therefore, the stirring time can be appropriately determined while confirming how mixing is performed.

When the plastic waste P and the woodchip W are sufficiently mixed with each other, the mixture thereof is discharged from a mixer 3, and is quantitatively supplied to a grinding device 4, and is ground. In the present embodiment, the specific configuration of the grinding device 4 has no restriction. In the case where the plastic waste P and the woodchip W having a size of a diameter or a side of about 5 mm, or a weight of about 0.1 g are introduced, the grinding device 4 is used which can grind 75 wt% or more thereof into a fine powder with a diameter or a side of 1 mm or less.

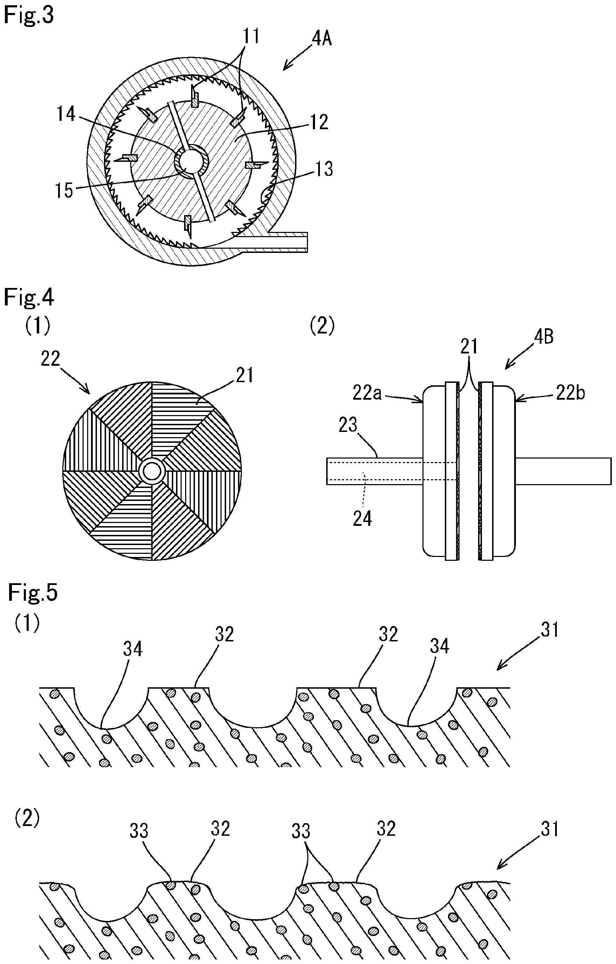

For example, as shown in Fig. 3, an impact type pulverizing mill 4A having a rotor 12 including a plurality of rotary blades 11 (or a plurality of hammers) mounted at the outer circumferential part thereof, and a file-shaped fixed blade 13 arranged so as to surround the radial outside of the rotary orbit of the rotary blade 11, and capable of pulverizing the object to be processed introduced through a supply route 15 formed in the inside of the rotating shaft 14 with a strong impact action by the rotary blade 11 and the fixed blade 13 by rotating the rotor 12 at a high speed can be used as the grinding device 4.

Alternatively, a pulverizing mill 4B having a rotor 22 including a file-shaped concave-convex surface 21 formed thereon as shown in Fig. 4(1), and including two rotors 22a and 22b arranged with a prescribed interval therebetween so that the concave-convex surfaces 21 are opposed to each other as shown in Fig. 4(2), and configured such that an object to be processed is supplied to the region between the rotors 22a and 22b through a supply route 24 formed in the inside of the rotating shaft 23 with the rotors 22a and 22b rotated at a high speed in the opposite directions, respectively, and is collided with the concave-convex surfaces 21, thereby to be able to be pulverized can be used as the grinding device 4.

Incidentally, in order to pulverize an object to be processed with a size of a diameter or a side of about 5 mm, or a weight of about 0.1 g into a diameter or a side of 1 mm or less by the grinding device 4 with efficiency and for a short time, it becomes necessary to rotate the rotor of the grinding device 4 (e.g., the rotor 12 shown in Fig. 3, or the rotors 22, 22a, and 22b shown in Fig. 4) at a high speed (e.g., 1500 rpm or more). Then, when the object to be processed is supplied to the grinding device 4 with the rotor rotating at a high speed, the friction between the objects to be processed and between the object to be processed and the element in the grinding device 4 generates heat. When such a grinding step is continuously carried out, the temperatures of the inside of the grinding device 4, and the object to be processed may become high (e.g., 80°C or more).

When the plastic waste P including a plurality of kinds of plastics mixed therein is supplied to the grinding device 4 as in the present embodiment, the plastic waste P includes therein low melting point sheets and films, and low melting point additives added during plastic manufacturing. This causes a fear that, when the temperature of the inside of the grinding device 4 increases to about 80°C, those are softened, and are attached, and deposited on the elements in the grinding device 4 (e.g., the rotary blade 11, and the fixed blade 13 shown in Fig. 3, or the concave-convex surface 21 of the rotor 22 shown in Fig. 4), resulting in the reduction of the grinding efficiency, or resulting in an ungrindable state.

Incidentally, although some grinding devices 4 are equipped with a cooling device, it is difficult to cool the rotors 12 and 22 and the tip of the rotary blade 11 rotating at a high speed. For this reason, when the plastic waste P including a plurality of kinds of plastics mixed therein is supplied, and the grinding step is continuously carried out, the plastics are still attached and deposited, which may cause problems such as the reduction of the grinding efficiency and an ungrindable state.

Further, the impact type pulverizing mill 4A shown in Fig. 3 is configured such that the particle size of the ground product can be adjusted by adjusting the gap dimension between the rotary blade 11 and the fixed blade 13 (the particle size of the ground product can be made smaller by setting the gap dimension smaller). In the case where the plastic waste P includes a plastic film with a thickness of about 100 µm therein, even when the gap dimension between the rotary blade 11 and the fixed blade 13 is set as small as possible, a very thin plastic film may slip through the gap therebetween. In this case, grinding into a diameter or a side of 1 mm or less cannot be performed.

However, in the present embodiment, only the plastic waste P is not supplied to the grinding device 4, but the mixture of the plastic waste P and the woodchip W is supplied to the grinding device 4, and the grinding step is carried out. For this reason, the foregoing problems can be preferably avoided.

Specifically, in the case where the mixture of the plastic waste P and the woodchip W is supplied to the grinding device 4, and the grinding step is carried out, even when the temperature of the grinding device 4 increases due to the frictional heat, the increase in temperature can be suppressed by the evaporation of a small amount of the residual moisture included in the mixture, and even when the plastics are partially softened, and are momentarily attached on the element in the grinding device 4, the woodchip W scrubs them (i.e., the woodchip W collides with the attached plastics, and physically rips off them). As a result, even when the grinding step is continuously carried out, it is possible to preferably avoid the attachment and deposition of the plastics onto the rotors and the like of the grinding device 4.

Further, the plastic waste P is stirred while being mixed with the woodchip W in the grinding device 4. For this reason, even when a very thin plastic film is included in the plastic waste P, it is possible to preferably avoid the film from slipping through the gap between the rotary blade 11 and the fixed blade 13 alone.

Incidentally, when the mixing ratio of the woodchip W is less than 20 wt% (the mixing ratio of the plastic waste P is 80 wt% or more), the plastic attachment preventive effect and the slipping preventive effect as described above may be reduced. For this reason, the mixing ratio of the woodchip W is preferably set at 20 wt% or more. Whereas, in the case where the mixing ratio of the plastic waste P is less than 30 wt% (the mixing ratio of the woodchip W is 70 wt% or more), when the ground product is used as the raw material for a synthetic resin molded product, the plastic component may not be able to be allowed to favorably function as a binder (defective molding may be caused). For this reason, the mixing ratio of the plastic waste P is preferably set at 30 wt% or more.

Incidentally, in the present embodiment, as the second material to be mixed with the plastic waste P, the woodchip W is used. However, other materials (e.g., a crushed product or a ground product of carbon fiber or glass fiber for use in FRP, or a ground product of shell, bamboo chips, and chaff of grains) can also be used as the second material. However, the material is required to be a material not molten under a temperature condition of 200°C. By rotating the rotor of the grinding device 4 at a high speed, even when the temperature of the inside of the grinding device 4 increases, the temperature does not largely exceed 100°C. Therefore, when the second material has a heat resistance of about 200°C, it is possible to prevent the attachment and the deposition of plastics in the inside of the grinding device 4 without a problem.

Then, the powder of the mixture of the plastic waste P and the woodchip W is supplied as the raw material for the deck material 31 to an extrusion molding machine (or an injection molding machine, a press molding machine, a casting molding machine, or the like), and a molding step is carried out. Incidentally, at this step, a pigment and other additives can be added to the raw materials, if required.

When the heating temperature in the extrusion molding machine is set at a proper value (e.g., 150 to 200°C), thereby to carry out a molding step, in the molding machine, the raw material (and the additives) are heated. Thus, the powders of the plastics having a lower melting point than the molding temperature of the plastics included in the plastic waste P supplied as the raw material are molten and mixed, resulting in a binder in the deck material 31 (molded product). On the other hand, plastics having a higher melting point than the molding temperature, foreign matters such as aluminum and paper, and the powder of the woodchip W are not molten, and function as a filler while being dispersed in the inside and on the surface of the binder.

At this step, the base color of the deck material 31 becomes the color synthesized by mixing various original colors of the plastics serving as a binder and having a lower melting point than the molding temperature (e.g., a color in a grey range, or a color in the range of a pigment when the pigment is added as a sub raw material). In contrast, plastics having a higher melting point than the molding temperature, foreign matters such as aluminum and paper, and the powder of the woodchip W are dispersed still in their respective original colors in the inside of the deck material 31. Then, out of these, those different in color and/or glossiness from the base color, and exposed at the surface of the deck material 31 constitute the spots 33.

However, the raw materials (plastics having a higher melting point than the molding temperature, foreign matters such as aluminum and paper, and the powder of the woodchip W) serving as the source of the spots 33 are not exposed at the surface of the deck material 31 immediately after molding. More specifically, the surface of the deck material 31 immediately after molding is composed of a resin layer of plastics serving as a binder and having a lower melting point than the molding temperature. The raw materials serving as the source of the spot 33 (i.e., plastics having a higher melting point than the molding temperature, foreign matters such as aluminum and paper, and the powder of the woodchip W) are distributed in the inside thereof.

Then, the surface of the deck material 31 after molding is subjected to brushing processing using a rotary brush, or the like, thereby to scrape off the surface layer (resin layer) (e.g., the layer 0.5 mm from the surface) of the deck material 31. As a result, a large number of spots 33 distributed in the inside of the surface layer are exposed at the surface of the deck material 31.

Incidentally, in the deck material 31 of the present embodiment, during molding, a large number of concaves and convexes (convex portions 32 and concave portions 34 shown in Fig. 5 (1)) are formed on the surface by a die (or by embossing immediately after molding). When the surface is subjected to brushing processing, the brush touches the convex portions 32 harder than the concave portions 34. For this reason, as shown in Fig. 5 (2), at the convex portions 32, a larger amount of the resin layer is scraped. As a result, at the convex portions 32, a larger number of spots 33 are exposed.

Conventional synthetic resin molded products mostly have smooth surface, and large glossiness. When a deck material made of a synthetic resin has a smooth surface, it is slippery and dangerous. Whereas, when the glossiness is large, undesirably, the natural feel is impaired, and the material does not look good. In the foregoing manner, molding is performed, and finishing processing (brushing processing) of the surface layer is performed. As a result, the colors (different from the base color) of a large number of spots 33 exposed at the surface form a natural stipple pattern with a high sense of design on the surface. In addition, it is possible to obtain a distinctive surface having a proper surface roughness like the rough surface of a wooden solid natural material, less slippery, and having a natural feel reflecting a light in a manner closely analogous to that of natural wood by a subtle change in reflection of a light due to the angle of fine concaves and convexes formed at the surface of the convex portions 32 by brushing.

In the present embodiment, as one example of the plastic waste P for use as the raw material, mention is made of hardly classifiable plastic trash in industrial waste or general waste. This does not mean that the plastic waste P is limited to hardly classifiable ones of the plastic trash in the recovered industrial waste or general waste. In other words, plastics easy to sort out of the recovered plastic trash are not required to be excluded from the target of the plastic waste P to be used as the raw material. Therefore, the recovered plastic trash can be used as the raw material as they are (with plastics easy to sort and hardly classifiable plastics mixed therein).

### REFERENCE SIGNS LIST

- 1: First tank
- 2: Second tank
- 3: Mixer
- 3a: Bowl
- 3b: Stirring impeller
- 4: Grinding device
- 4A: Impact type pulverizing mill
- 4B: Pulverizing mill
- 11: Rotary blade
- 12: Rotor
- 13: Fixed blade
- 14: Rotating shaft
- 15: Supply route
- 21: Concave-convex surface
- 22, 22a, 22b: Rotor
- 23: Rotating shaft
- 24: Supply route
- 31: Deck material
- 32: Convex portion
- 33: Spot
- 34: Concave portion

## Claims

1. A synthetic resin molded product using plastic waste, the molded product molded using a powder of plastic waste including a plurality of kinds of plastics mixed therein, and a powder of a second material not molten under a temperature condition of 200°C as raw materials,
wherein a large number of spots different in color and/or glossiness from a base color of the molded product are scattered at random on a surface of the molded product, and a stipple pattern is formed on the surface of the molded product.

2. The synthetic resin molded product using plastic waste according to claim 1, wherein ocean plastic trash, or hardly classifiable plastic trash in industrial waste or general waste is used as the plastic waste serving as the raw material.

3. The synthetic resin molded product using plastic waste according to claim 1, wherein a powder of plastic having a higher melting point than a molding temperature of plastics included in the plastic waste serving as the raw material, and the powder of the second material are dispersed still in an original color in an inside and on the surface of the molded product, and out of these, those different in color and/or glossiness from the base color, and exposed at the surface of the molded product constitute the spots.

4. A method for manufacturing a synthetic resin molded product using plastic waste, the method comprising:
mixing 30 to 80 wt% of plastic waste including a plurality of kinds of plastics each having a diameter or a side of 5 mm or less or a weight of 0.1 g or less and having different colors and melting points mixed therein, and 20 to 70 wt% of a second material having a diameter or a side of 5 mm or less, and not molten under a temperature condition of 200°C;
grinding a mixture thereof into a powder with a diameter or a side of 1 mm or less by a grinding device;
supplying the resulting powder to a molding machine, and carrying out a molding step; and
scraping a surface layer of the molded product, thereby exposing spots constituting a stipple pattern on a surface of the molded product, the spots being formed by a powder of plastic having a higher melting point than a molding temperature of plastics included in the plastic waste and a powder of the second material, that are different in color and/or glossiness from a base color of the molded product.
